(19) Europäisches Patentamt
European Patent Office
Office européen des brevets

(11) Publication number: 0 024 892
B1

(12) **EUROPEAN PATENT SPECIFICATION**

(45) Date of publication of patent specification: 18.05.83

(51) Int. Cl.[3]: C 09 B 48/00, C 09 B 67/22

(21) Application number: 80302903.2

(22) Date of filing: 21.08.80

# (54) Process for preparing quinacridonequinone.

(30) Priority: 27.08.79 US 69865

(43) Date of publication of application:
11.03.81 Bulletin 81/10

(45) Publication of the grant of the patent:
18.05.83 Bulletin 83/20

(84) Designated Contracting States:
CH DE GB LI

(56) References cited:
US - A - 3 251 845
US - A - 3 607 336
US - A - 3 647 494
US - A - 4 025 518

(73) Proprietor: E.I. DU PONT DE NEMOURS AND COMPANY
Legal Department 1007 Market Street
Wilmington Delaware 19898 (US)

(72) Inventor: Maurer, John Frederick
306 Glen Berne Drive
Wilmington Delaware (US)

(74) Representative: Woodcraft, David Charles et al,
BROOKES & MARTIN High Holborn House 52/54
High Holborn
London, WC1V 6SE (GB)

EP 0 024 892 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

Process for preparing quinacridonequinone

The present invention relates to an improved process for the preparation of quinacridonequinone and its substituted derivatives. More specifically, the present invention relates to an improved process for the preparation of quinacridonequinone and its substituted derivatives by the nucleation of particles in the presence of vanadium pentoxide and an alkali metal chlorate as an oxidizing agent.

U.S. Patent 4,025,518 discloses a process for oxidizing a dihydroquinacridone to a quinacridonequinone by contacting the dihydroquinacridone with an alkali metal chlorate oxidizing agent in the presence of vanadium pentoxide and an aqueous acidic medium. The quinacridonequinone produced, however, varied somewhat in purity and purities of greater than 95% are not achievable by the process described in the above patent.

It has now been discovered that, if the oxidation of a dihydroquinacridone (DQA) to a quinacridonequinone (QAQ) is accompanied by the nucleation of particles of quinacridonequinone, the purity of the quinacridonequinone is dramatically increased. This nucleation can be achieved by the addition into the reaction mixture of water. The purity of the oxidation product quinacridonequinone produced by the process of this invention is generally 96—99.9%, preferably 98—99.9% and most preferably 99—99.9%.

The process of the present invention produces, without purification, a QAQ that is of a higher purity than that achieved when the prescribed amount of water is not added.

According to the invention, there is provided a process for preparing a quinacridonequinone which process comprises oxidizing corresponding dihydroquinacridone (DQA) having the general formula set forth and defined below by adding the DQA as a solution (A) in an aqueous acid medium to a solution (C) of vanadium pentoxide in an aqueous acid medium at a temperature of from 75°C to 100°C and adding separately and simultaneously to solution (C) an aqueous solution (B) of an alkali metal chlorate in order to regenerate pentavalent vanadium, solutions (A) and (B) being added to solution (C) over a period of at least two hours, characterized in that QAQ nuclei are generated in the reaction medium by controlled addition of water in a total amount (excluding water present in solutions (A) and (C)) of from 9.4 to 30.4 parts by weight per part by weight of DQA:—

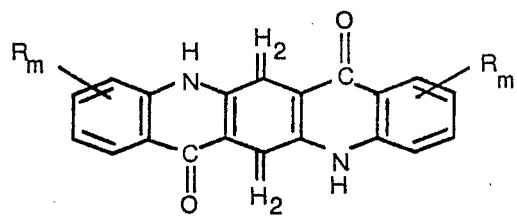

in which R is hydrogen, halogen or an alkyl group having 1 or 2 carbon atoms and m is 1 or 2.

The process of the invention requires that the water, DQA, acid, vanadium pentoxide and alkali metal chlorate be mixed under controlled conditions. The mere sudden mixing of the reactants would be undesirable because of the exothermic reaction of the acid and the alkali metal chlorate and the great amount of heat that would be given off. Sudden mixing would result in the dissipation of the chlorate before the conversion of all the DQA to QAQ. Chlorate is required to regenerate the active V(+5) from the reduced V(+4) state. Therefore, in such a case, there would have to be a continuous or stepwise addition of chlorate during the reaction.

The process of the invention is conveniently carried out under controlled conditions involving the separate addition of reactants. This is achieved by adding a Solution A simultaneously but separately with a Solution B to a Solution C.

Solution A is a solution of the dihydroquinacridone in an aqueous acid medium. The concentration of acid must be such that (1) the DQA is dissolved in the aqueous acidic medium, (2) the acid does not interfere with the reaction and (3) the acidic condition of Solution C below is maintained as Solution B is added. In the case of sulfuric acid, a concentration above 98% sulfuric will result in sulfonation of the DQA which will reduce the yield of QAQ. At about 95—98% sulfuric, sulfonation can occur, but only if the temperature is above room temperature. At about 92—94% sulfuric, the preferred concentration of sulfuric acid, sulfonation is avoided while providing an acidic medium in which the DQA is very soluble. Although at below 92% sulfuric acid, the DQA solubility begins to drop, the process is operable. Generally, the process of the invention is conducted at sulfuric acid concentrations of 90—95% by weight.

Solution B is a solution of alkali metal chlorate and water. The concentration of alkali metal chlorate in water must be no greater than the solubility of acid chlorate in water. The amount of chlorate based on DQA is an amount in excess of the stoichiometric amount required to react with DQA. Generally any amount in excess of the stoichiometric amount is operable. Amounts greater than a 100% excess give no significant improvement in yield. Preferably, the weight ratio of said chlorate to

DQA is 0.57—1.0, more preferably 0.8—1.0 and most preferably 0.9—1.0, where 1.08 is an excess of 100% of alkali metal chlorate.

Solution C is a solution of vanadium pentoxide in an aqueous acidic medium. The concentration of vanadium pentoxide is such that the weight ratio of $V_2O_5$:DQA is 0.015 or greater. Generally, this ratio is 0.015—2.30. The preferred ratio is 0.015—0.05. Ratios greater than 0.05 do not give higher DQA purities. The increased levels of $V_2O_5$ result in the need for less of the chlorate until, if sufficient $V_2O_5$ is present, no chlorate need be added. However, in view of the relative high cost of $V_2O_5$ compared to the chlorate, operating with $V_2O_5$:DQA ratios greater than 0.05 is not economical. Generally when said ratio is 0.015 or greater, the QAQ assay is 95% or more. When said ratio is 0.025 or greater, the assay is 97% QAQ or more. When said ratio is 0.05 or greater, the assay is 99% QAQ or more. Thus, a preferred ratio is 0.015—0.05 and a more preferred ratio is 0.025—0.05.

Solution C is prepared from vanadium pentoxide, water and acid. The acid can be any inorganic acid that does not interfere with the oxidation reaction and does not sulfonate the DQA. Sulfuric acid is preferred. Generally, the acid concentration of Solution C is 50—70% by weight. At greater than 70% the chlorate ion's availability to react with the vanadium ion is reduced due to the decomposition of the chlorate ion. Also at more than 70% acid concentration, the formation of explosive chlorine/oxygen compounds could occur. At concentrations less than 50% acid, a stable foam tends to form that makes the removal of chlorine gas, that is given off, more difficult.

Solutions A and B are added separately but simultaneously to Solution C at rates such that the addition of both will be completed in at least 2 hours. Addition of Solutions A and B in less than 2 hours results in incomplete oxidation. Addition of Solutions A and B is generally accomplished in 2—200 hours, preferably 2—1/2 to 25 hours, most preferably 3—5 hours. Addition of Solutions A and B in more than 5 hours does not yield any advantage.

Water required to generate QAQ nuclei may be added as a separate solution to Solution C as water or via steam sparging or the water may be added with the aqueous chlorate solution described above as Solution B. Thus, the water may be optionally added directly or it may be included with the chlorate solution. When water is added separately, its addition rate should be such that it is completely added at the same time as Solutions A and B.

The continuous presence of QAQ nuclei during the oxidation of DQA is required to achieve the improved results described herein. Nuclei forming compounds are continuously added directly to the reaction mixture or formed in situ as, e.g., by the addition of water with the chlorate and/or direct addition.

It is critical that the amount of water added for generating QAQ nuclei be from 9.4—30.4 parts by weight per part of DQA exclusive of the water in the DQA and vanadium pentoxide solutions. Thus, the aforesaid amount of water added is the total of the water added directly as water or steam and/or the water added with the chlorate solution. Generally the use of 9.4—30.4 parts by weight of water per part of DQA will yield assays of QAQ of 96% or more. The use of 10.5—24.4 parts by weight of water per part of DQA will yield assays of QAQ of 98% or more and 14.4—20.4 parts by weight of water per part of DQA will yield assays of QAQ of 99% or more.

The dihydroquinacridones utilized in the process of the invention are well known compounds and can be prepared by any of a variety of methods known in the art. For example, dihydroquinacridones can be prepared according to U.S. Patent 2,821,529 by heating dialkyl ester of dianilinodihydro-terephthalic acid in an inert high-boiling liquid to form the corresponding dihydroquinacridone upon cyclization.

The temperature at which the oxidation is conducted should be from 75—100°C. Below 75°C the oxidation reaction proceeds less favorably resulting in poor quality quinacridonequinone and incomplete oxidation. Above about 100°C, the alkali metal chlorate can decompose and incomplete oxidation results. The best quality quinacridonequinone is produced at a temperature from 80—90°C.

The alkali metal chlorate preferred from the standpoint of economy and availability is sodium chlorate.

The vanadium pentoxide utilized in the oxidizing agent according to the practice of the invention can be used as the sole oxidizing agent but the high cost of vanadium pentoxide and the associated pollution problem precludes its use in stoichiometric amount. Therefore, the vanadium pentoxide is preferably utilized in catalytic amounts and alkali metal chlorate is used to regenerate the active V(+5) from the reduced V(+4) state. Alkali metal chlorate may oxidize dihydroquinacridone to form a poor quality brownish quinacridonequinone.

The total amount of alkali metal chlorate and vanadium pentoxide as stated above must be at least stoichiometric with respect to the dihydroquinacridone in order to produce the corresponding quinacridonequinone. When catalytic amounts of vanadium pentoxide are utilized, it is preferred that the amount of alkali metal chlorate utilized be at least 100% in excess of the stoichiometric amounts required to insure complete oxidation. More than 100% in excess of stoichiometric is operable but not economical.

Since chlorine gas may be generated in the reduction of sodium chlorate to regenerate the active V(+5) and this chlorine gas may react with the dihydroquinacridone to form quinacridonequinone and chlorinated byproducts, it is preferred that air, or other suitable carrier gas be passed through the

aqueous acidic medium during the oxidation reaction to remove the chlorine gas. This practice is referred to as air sparging in the art. Air is the gas preferred for economy and efficiency, but any gas, e.g., nitrogen, capable of sparging the chlorine gas from the aqueous acidic medium without interfering with the oxidation reaction is suitable. To further insure that possible side reactions with chlorine are minimized, the dihydroquinacridone is first dissolved in acid then slowly added to an acidic solution of vanadium pentoxide simultaneously with the addition of a separate aqueous chlorate solution and optionally a separate water addition.

The quinacridonequinone so produced can be isolated in the conventional manner, e.g., filtration, washing and drying and directly incorporated into a coating composition or further treated by such conventional procedures as ball milling, salt milling, etc. For example, quinacridonequinone can be incorporated into a solid solution with quinacridone as taught in U.S. Patent 3,607,336 to form an attractive gold pigment, especially useful in metallic finishes with aluminum.

## Examples

In the following examples that further illustrate the invention, all parts are by weight unless otherwise indicated.

### Example 1

Solution C

Five hundred ml of 96% by weight $H_2SO_4$ and 5 g of $V_2O_5$ were dissolved in 540 ml of water and the temperature maintained at 85°C with electric heat.

Solution B

One hundred grams of $NaClO_3$ were dissolved in 530 ml of water.

Solution A

Five hundred ml of 96% by weight $H_2SO_4$ were added to 20 ml of water which was then cooled to 25°C and 100 g of 6,13-dihydroquinacridone stirred into the solution at 25°C.

Solution C was maintained at 85°C with electric heat while simultaneously but separately adding 680 ml of water and Solutions A and B to the Solution C at rates such that the addition time was 4 hours and 30 minutes with air sparging at 10 SCFH (283 litres per hour) and stirring. The resulting slurry was maintained at 85°C for an additional 30 minutes. Sufficient water was added to reduce the acid concentration of the slurry to 30—40% by weight and the slurry separated by filtration. The filtered solids were washed free of acid with water and dried. The product was 103.4 g of a bright yellow pigment analyzed as 99.2% quinacridonequinone, <0.5% 6,13-dihydroquinacridone and <0.1% quinacridone. The water/DQA weight ratio was 10.6.

### Example 2

The procedure and amounts indicated in Example 1 were followed except that Solution B was 100 g of $NaClO_3$ in 1500 ml of water and no water was separately added in addition to Solutions B and C to the initial solution.

Solutions A and B were added to Solution C at 7.5 ml/min and 3 ml/min respectively. The product was 108.1 g which analyzed 99.5% quinacridonequinone, <0.5% 6,13-dihydroquinacridone and <0.1% quinacridone. The water/DQA weight ratio was 20.3

### Examples 3—11

The procedure and amounts indicated in Example 1 were followed except that the below indicated amounts of water were added as water separately to give the product analysis shown:

| Example | Separate Water Addition (ml) | QAQ % | QA % | DQA % | Water /DQA Weight Ratio |
|---|---|---|---|---|---|
| 3 | 1030 | 97.3 | <0.1 | <0.5 | 10.3 |
| 4 | 1030 | 97.4 | <0.1 | <0.5 | 10.3 |
| 5 | 1130 | 98.1 | <0.1 | <0.5 | 11.3 |
| 6 | 1230 | 98.6 | <0.1 | <0.5 | 12.3 |
| 7 | 1380 | 98.3 | <0.1 | <0.5 | 13.8 |
| 8 | 1530 | 99.2 | <0.1 | <0.5 | 15.3 |
| 9 Best Mode | 1530 | 100.0 | <0.1 | <0.5 | 15.3 |
| 10 | 1930 | 98.1 | <0.1 | <0.5 | 19.3 |
| 11 | 2930 | 96.1 | 0.3 | <0.5 | 29.3 |

QAQ = quinacridonequinone

QA = quinacridone

DQA = 6,13-dihydroquinacridone

The above product analyses were obtained by a spectrophotometric method using purified materials as standards. QAQ was compared at 427 millimicrons, QA at 238 millimicrons and DQA at 600 millimicrons. The product analyses, except for Example 11, showed QA and DQA amounts below the limits of detectability of the test. These limits were less than 0.1% for QA and less than 0.5% for DQA. The remainder in each case included impurities present in the reaction mixtures such as chlorinated products relative to impurities present in the purified standard.

Industrial Applicability

As a result of this process, QAQ of higher purity than heretofore possible can be prepared thereby providing a higher quality QAQ. The process of the present invention results in an improved purity of 96% or more and even 99% or more of QAQ.

**Claims**

1. Process for preparing a quinacridonequinone (QAQ) which process comprises oxidizing a corresponding dihydroquinacridone (DQA) having the general formula set forth and defined below by adding the DQA as a solution (A) in an aqueous acid medium to a solution (C) of vanadium pentoxide in an aqueous acid medium at a temperature of from 75°C to 100°C and adding separately and simultaneously to solution (C) an aqueous solution (B) of an alkali metal chlorate in order to regenerate pentavalent vanadium, solutions (A) and (B) being added to solution (C) over a period of at least two hours, characterized in that QAQ nuclei are generated in the reaction medium by controlled addition of water in a total amount (excluding water present in solutions (A) and (C)) of from 9.4 to 30.4 parts by weight per part by weight of DQA:—

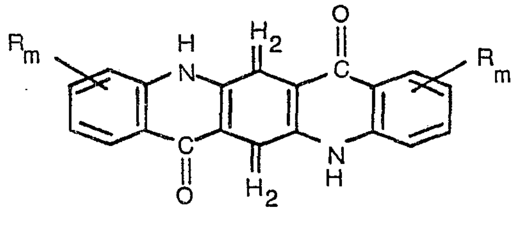

in which R is hydrogen, halogen or an alkyl group having 1 or 2 carbon atoms and m is 1 or 2.

2. A process according to Claim 1 wherein water to generate quinacridonequinone nuclei is added to the reaction medium separately from the water contained in solution (B).

3. A process according to Claim 2 wherein water is added as steam.

4. A process according to any one of the preceding claims wherein the temperature is 80°—90°C.

5. A process according to any one of the preceding claims wherein the water added is 10.5 to 24.4 parts by weight per part of DQA.

6. A process according to Claim 5 wherein the water added is 14.4 to 20.4 parts by weight per part of DQA.

7. A process according to any one of the preceding claims wherein the alkali metal chlorate is sodium chlorate.

8. A process according to Claim 7 wherein the sodium chlorate and DQA added are in a weight ratio of 0.57:1 to 1:1 of said chlorate:DQA.

9. A process according to Claim 7 wherein the sodium chlorate and DQA added are in a weight ratio of 0.8:1 to 1:1 of said chlorate:DQA.

10. A process according to Claim 7 wherein the sodium chlorate and DQA added are in a weight ratio of 0.9:1 to 1:1 of said chlorate DQA.

11. A process according to any one of the preceding claims wherein the vanadium pentoxide and DQA added are in a weight ratio of at least 0.015:1.

**Patentansprüche**

1. Verfahren zur Herstellung von Chinacridonchinon (QAQ) bei dem ein entsprechendes Dihydrochinacridon (DQA) der nachstehend angegebenen Formel und Definition oxidiert wird, indem man das DQA als eine Lösung (A) in einem wässrigen Säuremedium zu einer Lösung (C) von Vanadinpentoxid in einem wässrigen Säuremedium bei einer Temperatur von 75 bis 100°C gibt und separat und gleichzeitig zu Lösung (C) eine wässrige Lösung (B) eines Alkalimetallchlorats zur Regenerierung von fünfwertigem Vanadin zugibt, wobei die Lösungen (A) und (B) zur Lösung (C) innerhalb von mindestens 2 Stunden zugegeben werden, dadurch gekennzeichnet, dass QAQ-Kerne im Reaktionsmedium durch kontrollierte Zugabe von Wasser in einer Gesamtmenge (unter Ausschluss von in den Lösungen (A) und (C) vorhandenen Wasser) von 9,4 bis 30,4 Gewichtsteilen pro Gewichtsteil DQA der folgenden Formel erzeugt werden

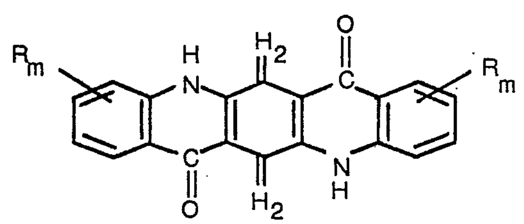

in der R Wasserstoff, Halogen oder einen Alkylrest mit 1 oder 2 Kohlenstoffatomen und m 1 oder 2 bedeutet.

2. Verfahren nach Anspruch 1, dadurch gekennzeichnet, dass Wasser zur Erzeugung von Chinacridonchinon-Kernen zum Reaktionsmedium getrennt von dem in Lösung (B) enthaltenen Wasser gegeben wird.

3. Verfahren nach Anspruch 2, dadurch gekennzeichnet, dass man Wasser in Form von Wasserdampf zusetzt.

4. Verfahren nach einem der vorstehenden Ansprüche, dadurch gekennzeichnet, dass die Temperatur 80 bis 90°C beträgt.

5. Verfahren nach einem der vorstehenden Ansprüche, dadurch gekennzeichnet, dass das Wasser in Mengen von 10,5 bis 24,4 Gewichtsteilen pro Teil DQA zugesetzt wird.

6. Verfahren nach Anspruch 5, dadurch gekennzeichnet, dass das Wasser in Mengen von 14,4 bis 20,4 Gewichtsteilen pro Teil DQA zugesetzt wird.

7. Verfahren nach einem der vorstehenden Ansprüche dadurch gekennzeichnet, dass es sich beim Alkalimetallchlorat un Natriumchlorat handelt.

8. Verfahren nach Anspruch 7, dadurch gekennzeichnet, dass das Natriumchlorat und das DQA in einem Gewichtsverhältnis von 0,57:1 bis 1:1 von Chlorat zu DQA zugegeben werden.

9. Verfahren nach Anspruch 7, dadurch gekennzeichnet, dass das Natriumchlorat und das DQA in einem Gewichtsverhältnis von 0,8:1 bis 1:1 von Chlorat zu DQA zugegeben werden.

10. Verfahren nach Anspruch 7, dadurch gekennzeichnet, dass das Natriumchlorat und das DQA in einem Gewichtsverhältnis von 0,9:1 bis 1:1 von Chlorat zu DQA zugegeben werden.

11. Verfahren nach einem der vorstehenden Ansprüche, dadurch gekennzeichnet, dass das Vanadinpentoxid und das DQA in einem Gewichtsverhältnis von mindestens 0,015:1 zugegeben werden.

## Revendications

1. Procédé de préparation d'une quinacridonequinone (QAQ) qui comprend l'oxydation d'une dihydroquinacridone (DQA) correspondante ayant la formule générale indiquée et définie ci-dessous par addition de la DQA sous forme d'une solution (A) dans un milieu acide aqueux à une solution (C) de pentoxyde de vanadium dans un milieu acide aqueux à une température de °C à 100°C et l'addition séparée et simultanée à la solution (C) d'une solution aqueuse (B) d'un chlorate de métal alcalin pour régénérer le vanadium pentavalent, les solutions (A) et (B) étant ajoutées à la solution (C) sur une période d'au moins deux heures, caractérisé en ce que des noyaux de QAQ sont engendrés dans le milieu réactionnel par addition contrôlée d'eau en une quantité totale (à l'exclusion de l'eau présente dans les solutions (A) et (C)) de 9,4 à 30,4 parties en poids par partie de DQA

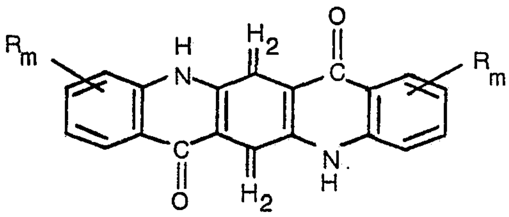

dans laquelle R est l'hydrogène, un halogène ou un groupe alcoyl de 1 ou 2 atomes de carbone et *m* est 1 ou 2.

2. Procédé selon la revendication 1, dans lequel l'eau engendrant des noyaux de quinacridonequinone est ajoutée au milieu réactionnel séparément de l'eau contenue dans la solution (B).

3. Procédé selon la revendication 2, dans lequel l'eau est ajoutée sous forme de vapeur.

4. Procédé selon l'une quelconque des revendications précédentes, dans lequel la température est de 80—90°C.

5. Procédé selon l'une quelconque des revendications précédentes, dans lequel on ajoute 10,5 à 24,4 parties en poids d'eau par partie de DQA.

6. Procédé selon la revendication 5, dans lequel on ajoute 14,4 à 20,4 partiers en poids d'eau par partie de DQA.

7. Procédé selon l'une quelconque des revendications précédentes, dans lequel le chlorate de métal alcalin est le chlorate de sodium.

8. Procédé selon la revendication 7, dans lequel le chlorate de sodium et la DQA sont ajoutés dans un rapport en poids chlorate:DQA de 0,57:1 et 1:1.

9. Procédé selon la revendication 7, dans lequel le chlorate de sodium et la DQA sont ajoutés dans un rapport en poids chlorate:DQA de 0,8:1 à 1:1.

10. Procédé selon la revendication 7, dans lequel le chlorate de sodium et la DQA sont ajoutés dans un rapport en poids chlorate:DQA de 0,9:1 à 1:1.

11. Procédé selon l'une quelconque des revendications précédentes, dans lequel le pentoxyde de vanadium et la DQA sont ajoutés dans un rapport en poids d'au moins 0,015:1.